Europäisches Patentamt

**European Patent Office**

**Office européen des brevets**

(19)

(11) Numéro de publication: **0 240 412**
**B1**

(12) **FASCICULE DE BREVET EUROPEEN**

(45) Date de publication du fascicule du brevet:
29.08.90

(51) Int. Cl.⁵: **E03F 11/00**

(21) Numéro de dépôt: **87400656.2**

(22) Date de dépôt: **24.03.87**

(54) **Fosse septique toutes eaux.**

(30) Priorité: **25.03.86 FR 8604265**

(43) Date de publication de la demande:
**07.10.87 Bulletin 87/41**

(45) Mention de la délivrance du brevet:
**29.08.90 Bulletin 90/35**

(84) Etats contractants désignés:
**AT BE CH DE ES FR GB GR IT LI LU NL SE**

(56) Documents cités:
**AU-B- 430 676**
**CH-A- 134 306**
**FR-A- 548 479**
**FR-A- 2 550 566**
**US-A- 2 272 912**
**US-A- 4 363 732**

(73) Titulaire: **EPARCO, 78, rue de Provence,**
**F-75009 Paris(FR)**

(72) Inventeur: **Philip, Hervé, La Soleiado E7 Avenue de Pont**
**Trinquat, F-34000 Montpellier(FR)**

(74) Mandataire: **Derambure, Christian, BUGNION**
**ASSOCIES 55, rue Boissonade, F-75014 Paris(FR)**

ACTORUM AG

## Description

L'invention concerne une fosse septique toutes eaux.

Une fosse septique toutes eaux reçoit l'ensemble des eaux usées domestiques, c'est-à-dire les eaux vannes (provenant des WC) et les eaux ménagères (provenant des cuisines et salles de bain).

Une fosse septique doit réaliser trois fonctions: la collecte des eaux, la liquéfaction au moins partielle des matières polluantes contenues dans les eaux usées, et la rétention des matières solides et des déchets flottants. Conformément aux dernières dispositions réglementaires applicables depuis 1982, une fosse septique doit être agencée de manière à éviter les cheminements directes entre les dispositifs d'entrée et de sortie ainsi que la remise en suspension et l'entraînement des matières sédimentées et des matières flottantes pour lesquelles un volume suffisant est réservé. La hauteur utile d'eau ne doit pas être inférieure à 1 m. Elle doit être suffisante pour permettre la présence d'une zone de liquide au sein duquel se trouve le dispositif de sortie des effluents. Le dispositif d'entrée des effluents doit être dimensionné pour éviter toute obstruction et conçu de manière à éviter la remise en suspension des matières décantées. La profondeur d'immersion du dispositif de sortie des effluents doit être telle qu'elle empêche l'entraînement des matières flottantes et limite l'entraînement des matières décantées éventuellement remises en suspension. La cloison éventuellement mise en place à l'intérieur de la fosse doit être percée d'orifices suffisamment dimensionnés et disposés de façon à empêcher les cheminements directes entre les dispositifs d'entrée et de sortie.

Auparavant, les dispositions réglementaires limitaient l'usage des fosses septiques aux seules eaux vannes.

Cette évolution des dispositions réglementaires a déterminé l'évolution de l'état de la technique.

Ainsi, d'un premier état de la technique antérieure correspondant aux fosses septiques d'usage limité aux eaux vannes, on connaît déjà (brevet français FR-A 2 050 858) une fosse septique comportant une enceinte divisée en deux compartiments: un compartiment d'entrée dans lequel débouche une amenée d'eaux vannes et un compartiment de sortie dans lequel débouche une évacuation "d'eaux claires". A une telle fosse septique doit être associé un élément épurateur constitué soit par un lit bactérien, soit par un plateau absorbant, soit par un épandage souterrain. Cet élément épurateur s'est souvent révélé être peu efficace voire court-circuité ou même inexistant. Un tel élément épurateur est illustré par exemple dans le brevet français FR-A 2 057 419.

Différents modes de réalisation ont été proposés en ce qui concerne de telles fosses septiques avec pour objectifs annoncés, soit de renforcer sa rigidité (brevet français FR-A 2 054 970) en prévoyant trois chambres continues à l'intérieur de la fosse septique; soit de permettre la réalisation de fosses septiques de grande capacité par segmentation (brevet français FR-A 2 110 681); soit d'incorporer un filtre à la fosse septique proprement dite (brevet français FR-A 2 158 165); soit de permettre une fabricatioin plus facile et plus rapide de la fosse septique (brevets français FR-A 2 215 517, FR-A 2 482 157 et FR-A 2 496 143); soit enfin d'être démontable et facilement transportable (brevet français FR-A 2 386 651).

On a également prévu de juxtaposer dans un ensemble unique deux sous ensembles indépendants de traitement des eaux vannes et des eaux ménagères respectivement (brevets français FR-A 2 110 746, FR-A 2 307 922 et FR-A 2 427 438) et ceci pour répondre aux exigences réglementaires en vigueur antérieurement.

La structure la plus classique de ces fosses septiques consiste à ce que le compartiment d'entrée ait un volume plus grand (notamment deux fois plus grand) que le compartiment de sortie; les deux compartiments étant séparés l'un de l'autre par une cloison transversale placée dans l'enceinte qui dépasse le niveau de liquide pour éviter le passage de particules flottantes depuis le premier vers le second compartiment. Une ouverture est ménagée dans la cloison, en partie médiane notamment, pour permettre le passage des eaux du premier au second compartiment tout en assurant la fonction décantation du premier compartiment. L'amenée et l'évacuation sont constituées le plus souvent par des conduits coudés vers le bas situés au même niveau. Un trou d'homme est généralement prévu dans le couvercle de l'enceinte.

Les dernières dispositions réglementaires sur les fosses septiques toutes eaux recevant l'ensemble des eaux usées domestiques ont conduit à un second état de la technique.

Les fabricants ont d'abord proposé purement et simplement, d'augmenter le volume des fosses pour tenir compte des débits accrus d'eaux à traiter. Mais, cette solution s'est révélée inefficace car le régime hydraulique d'une fosse septique toutes eaux est totalement différent de celui d'une fosse septique classique destinée aux seules eaux vannes. Il s'en est suivi l'évacuation par la fosse septique de boues, particules, matières grasses, etc. ... provoquant le colmatage du système d'épandage placé en aval de la fosse septique.

Pour pallier cet inconvénient, on a proposé d'adjoindre à la fosse septique, immédiatement en aval, un indicateur de fonctionnement qui signale l'entraînement des boues, c'est-à-dire le mauvais fonctionnement de la fosse septique. Cet indicateur de fonctionnement est dénommé selon les cas préfiltre ou décolloïdeur ou filtre dégrossisseur. Cette association d'une fosse septique toutes eaux et d'un préfiltre colloïdeur est décrite dans les brevets français FR-A 2 503 216 et FR-A 2 499 125. Ce dernier brevet français FR-A 2 499 125 prévoit d'ailleurs une possibilité de décolmatage par inversion du sens de circulation des eaux. Mais, il s'est avéré que l'existence de préfiltre ou colloïdeur séparé présente certains problèmes et c'est pourquoi il a été proposé ensuite d'intégrer celui-ci à la fosse septique toutes eaux. Il en est résulté des fosses septiques toutes eaux dans lesquelles le préfiltre ou décolloïdeur est placé dans le second compartiment (brevets français FR-A 2 523 618, FR-A 2 531 635, FR-A 2 550 566 et FR-A 2 554 843). Dans ces fosses septiques, l'évacuation débouche directement dans l'indicateur de fonctionnement, généralement fixé d'une part au couvercle de l'enceinte et d'autre part à la cloison de séparation. Deux trous d'hommes sont prévus pour accéder respectivement au premier compartiment et à l'indicateur de fonctionnement. De nombreux modes de réalisation de détails de telles fosses septiques toutes eaux avec préfiltre ou décolloïdeur incorporé ont été proposés. L'expérience démontre que l'indicateur de fonctionnement permet de repérer le colmatage de la fosse donc la nécessité d'une vidange avant que le système d'épandage lui-même ne soit colmaté. En revanche, ces fosses septiques toutes eaux ne jouent pas de façon optimale leur fonction de liquéfaction et de rétention des matières solides ce qui conduit à une charge d'entretien accru.

L'invention vise donc à résoudre simultanément le triple problème de la protection du système d'épandage; du fonctionnement optimal de la fosse septique en ce qui concerne ses fonctions de collecte, de liquéfaction et de rétention; et une capacité de stockage accrue.

En effet, il résulte du dernier état de la technique connu que l'emploi de préfiltre ou décolloïdeur incorporé à la fosse septique résoud certe le problème de la protection du système d'épandage mais affecte gravement le fonctionnement même de la fosse septique et sa capacité de stockage.

Par ailleurs, le document US-A 4 363 732 décrit une fosse septique pour eaux usées comprenant une enceinte A, un conduit d'amenée B des eaux usées et un conduit de sortie C des eaux claires. Ces deux conduits visent à permettre de diminuer la turbulence des eaux usées à l'entrée dans l'enceinte ainsi que celle des eaux claires à la sortie de l'enceinte, de façon à réaliser une tranquilité relative dans la zone liquide de l'enceinte.

Ce document vise donc à résoudre uniquement le problème de la turbulence des eaux et ne résoud pas l'objet de l'invention, à savoir, le triple problème d'une bonne protection du système d'épandage, d'une meilleure dégradation de matières solides, et d'une plus grande capacité de stockage. La fosse décrite dans ce document, contrairement à celle de l'invention, n'assure pas de protection de l'épandage vis-à-vis des matières transitant verticalement ou flottant entre deux eaux, et qui peuvent être facilement entraînées en dehors de la fosse par le dispositif de sortie.

L'invention propose donc une fosse septique toutes eaux du type ci-dessus qui comprend une enceinte; un conduit d'amenée des eaux usées; un conduit de sortie des eaux claires vers un système d'épandage; des moyens de décantation des matières par dépôt dans le fond de l'enceinte des matières les plus lourdes et par accumulation en surface des graisses et particules légères et de liquéfaction au moins partielle de ces matières par fermentation anaérobique; et des moyens de protection du système d'épandage afin de prévenir son colmatage, intégré à l'enceinte même. La fosse septique toutes eaux selon l'invention est telle que les moyens de décantation et de liquéfaction et les moyens de protection sont placés dans un compartiment unique de l'enceinte; le conduit d'amenée forme un double coude dont le tronçon aval est dirigé dans son ensemble vers la paroi de l'enceinte de manière que les effluents soient dirigés vers cette paroi et dont la sortie est ouverte également vers le haut de manière que les effluents soient dirigés également vers le haut; elle comporte un premier déflecteur placé transversalement dans l'enceinte, au moins sensiblement au niveau de la sortie, s'étendant sur toute ou au moins une partie substantielle de la largeur de l'enceinte, incliné notamment de 35 à 45 degrés sur la verticale et en particulier de 45° environ du fond vers le couvercle et des parois d'extrémités vers les parois d'extrémités, le premier déflecteur ayant pour fonction d'améliorer la décantation et de limiter la progression des turbulences vers le fond de l'enceinte; au conduit d'évacuation sont associés d'une part une cloison verticale située pour partie au-dessus, pour partie au-dessous de la surface libre S au moins sensiblement à l'aplomb du bord inférieur du second déflecteur et, d'autre part, un second déflecteur comportant un tronçon inférieur incliné du fond vers le couvercle et des parois d'extrémités vers les parois d'extrémités; la cloison verticale et le second déflecteur, et des cloisons latérales, définissant un passage pour les eaux claires comportant une ouverture d'entrée au moins sensiblement verticale limitée par les bords libres inférieurs de la cloison et du second déflecteur, puis un coude limité par le tronçon inférieur du déflecteur pour empêcher le passage des matières flottantes, puis une ouverture de sortie en communication avec le conduit d'évacuation.

Ainsi, contrairement aux fosses septiques toutes eaux de l'état de la technique, la fosse septique toutes eaux selon l'invention comporte un compartiment unique et non deux compartiments totalement distincts. De plus, la fosse septique toutes eaux selon l'invention ne comporte pas un dispositif de type préfiltre ou décolloïdeur occupant une partie notable de la fosse septique. Il s'ensuit que la fosse septique toutes eaux selon l'invention peut être fabriquée industriellement de façon particulièrement commode puisque les organes qui la constituent sont d'un encombrement limité et peuvent passer par des regards de visites. Une fosse septique selon l'invention se révèle présenter des performances supérieures à celles des fosses septiques de l'état connu de la technique. Ainsi, pour une fosse septique de 3 m³, le volume des boues stockées peut dépasser 1700 litres alors qu'il est inférieur à 1150 litres dans l'état de la technique. La surface d'échange entre les boues et le liquide surnageant est également augmenté de l'ordre de 50% pouvant dépasser 2 m² ou 3,3 m² respectivement à la mise en service et pour le volume maximal des boues. La forme de réalisation de l'amenée des eaux usées ne risque pas de piéger les graisses ce qui évite, par voie de conséquence le colmatage du dispositif d'entrée. Il existe une communication entre l'entrée et la sortie au-dessus du niveau de l'eau ce qui permet une bonne aération de la fosse septique. Le dispositif de sortie est facilement accessible et amovible. Il est conçu pour éviter que les boues ne viennent le colmater. Le volume des boues stockées étant plus important, l'intervalle de vidange peut être diminué de 50% environ.

Les autres caractéristiques de l'invention résulteront de la description qui suivra en référence aux dessins annexés dans lesquels:

— La figure 1 est une vue schématique en coupe verticale et longitudinale d'une fosse septique selon l'invention.
— La figure 2 est une vue schématique en coupe transversale et verticale selon la ligne 2.2 de la figure 1.

L'invention concerne une fosse septique toutes eaux qui comprend une enceinte 1, rigide; un conduit d'amenée 2 des eaux usées; un conduit d'évacuation 3 des eaux claires vers un système d'épandage non représenté et ne faisant pas en soi partie de l'invention.

La fosse septique comprend également, de façon connue en soi, des moyens 5 de décantation par dépôt dans le fond 4 de l'enceinte 1 des matières les plus lourdes ou boues B et par accumulation à la surface libre S des graisses des particules légères G; et de liquéfaction au moins partielle de ces matières B, G par fermentation anaérobique.

La fosse septique toutes eaux selon l'invention comprend enfin des moyens de protection 6 du système d'épandage afin de prévenir son colmatage, intégrés à l'enceinte 1.

Selon l'invention, les moyens 5 de décantation et de liquéfaction et les moyens 6 de protection sont placés dans un département unique de l'enceinte 1.

L'enceinte 1 comprend préférentiellement deux parties identiques ou sensiblement similaires l'une de l'autre à savoir une coquille inférieure 7a et une coquille supérieure 7b. Chacune des coquilles 7a, 7b, a en section droite longitudinale et en section droite transversale, une forme générale trapézoïdale isocèle. Les deux coquilles 7a, 7b sont réunies l'une à l'autre par leur grande base commune ouverte 8.

La coquille inférieure 7a comprend donc outre le fond 4 formant petite base deux parois d'extrémité entrée 9a et sortie 10a et deux parois latérales 11a, 12a toutes inclinées par rapport à la verticale d'un angle de 30° environ.

La coquille supérieure 7b comporte un couvercle supérieure 13 formant petite base plan et horizontal, deux parois d'extrémité d'entrée 9b et sortie 10b et deux parois latérales 11b et 12b. Les parois d'extrémités 9b, 10b et latérales 11b, 12b sont inclinées sur la verticale de la même manière que les parois d'extrémités 9a, 10a et latérales 11a, 12a. Les parois 9b, 10b, 11b, 12b de la coquille 7b sont reliées aux parois 9a, 10a, 11a, 12a et la coquille 7a dans la base 8. La base 8 est donc située à mi-hauteur entre le fond 4 et le couvercle 13.

Sur le couvercle 13 sont prévus deux regards 14 fermés par des couvercles 15. Les regards 14 sont placés aux deux parties extrêmes du couvercle 13 au voisinage des parois d'extrémités 9b, 10b.

Selon l'invention, le conduit d'amenée 2 forme un double coude replié sur lui-même et comporte donc un tronçon amont horizontal 16, un tronçon intermédiaire vertical 17 et un tronçon aval également horizontal 18.

Le tronçon amont 16 traverse la paroi d'extrémité entrée 9b au voisinage du couvercle 13. Le tronçon aval 18 est dirigé dans son ensemble vers la paroi d'extrémité 9a, 9b de l'enceinte 1 de manière que les effluents provenant du conduit d'amenée 2 soient dirigés vers cette paroi.

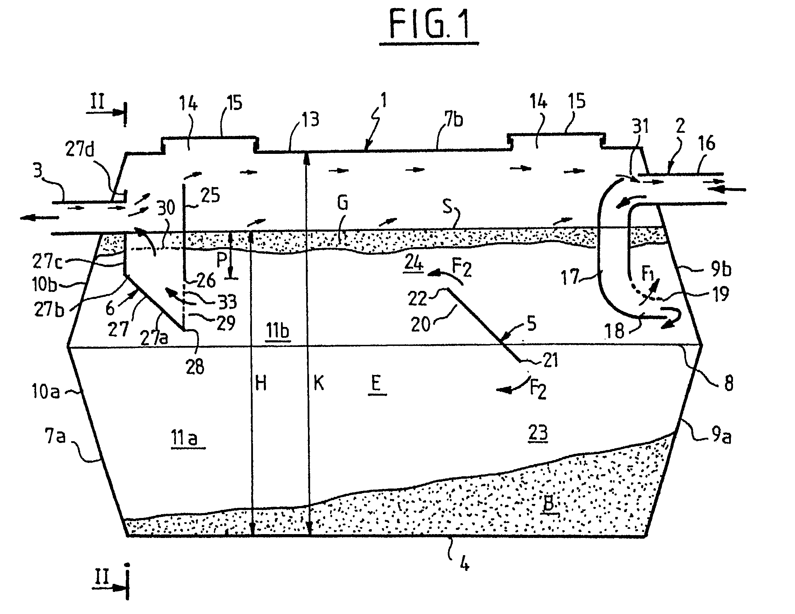

De plus, la sortie 19 du tronçon aval 18 est découpée en forme de gouttière afin d'être ouverte vers le haut de sorte que les effluents soient aussi dirigés vers le haut et ceci dans le sens des flèches $F_1$ (figure 1).

La fosse septique toutes eaux selon l'invention comprend également un premier déflecteur 20 placé l'enceinte 1, transversalement, au moins sensiblement au niveau de la sortie 19 et constituant au moins en partie les moyens 5. Le premier déflecteur 20 s'étend sur toute ou au moins une partie substantielle de la largeur de l'enceinte 1, c'est-à-dire entre les parois latérales 11a, 11b d'une part et 12a, 12b d'autre part. Le premier déflecteur 20 a pour fonction d'améliorer la décantation et de limiter la progression des turbulences vers le fond 4 de l'enceinte 1. Il s'ensuit une circulation de l'eau selon les flèches $F_2$ (figure 1). Dans une forme de réalisation préférentielle, le premier déflecteur 20 est incliné notamment de 35° à 55° sur la verticale et en particulier de 45° environ, du fond 4 vers le couvercle 13 et des parois d'extrémités entrée 9a, 9b vers les parois d'extrémités sortie 10a, 10b.

Si on appelle H la hauteur de l'eau dans l'enceinte, hauteur définie par la position du conduit d'évacuation 3 ainsi qu'on le verra par la suite, le centre du premier déflecteur 20 est situé entre 0,65 H et 0,75 H et en particulier à 0,70 H environ et ceci à partir du fond 4. Le bord inférieur 21 du premier déflecteur 20 est situé entre 0,5 H et 0,60 H et en particulier à 0,55 H environ à partir du fond 4. Le bord supérieur 22 du premier déflecteur 20 est situé entre 0,75 H et 0,85 H et en particulier à 0,80 H environ à partir du fond 4.

Dans la forme de réalisation représentée sur la figure 1, qui correspond à un cas possible mais non limitatif, le premier déflecteur 20 est situé environ au tiers de la longueur de l'enceinte 1 (c'est-à-dire entre les parois d'extrémité 9a, 9b et 10a, 10b), à compter des parois d'extrémité d'entrée 9a, 9b. Plus généralement et pour tenir compte d'un possible volume total de la fosse septique supérieur, il est préférable que le premier déflecteur 20 ne soit pas trop éloigné des parois d'extrémités 9a, 9b. Pour cette raison, le premier déflecteur 20 est en général situé à une distance de la jonction des deux parois 9a, 9b égale ou de l'ordre de 5,5 à 7,7 fois et préférentiellement de l'ordre de 6 à 7 fois le diamètre du conduit d'amenée 2. Ou, en variante, cette distance est égale ou de l'ordre de H.

Le premier déflecteur 20 ainsi défini laisse d'une part entre son bord inférieur 21 et le fond 4 un grand passage inférieur 23 et d'autre part entre son bord supérieur 22 et la surface libre S un plus petit passage supérieur 24. Le passage inférieur 23 permet le passage des matières lourdes ou boues B tandis que le passage supérieur 24 permet celui des graisses et particules légères G.

Le premier déflecteur 20 peut être fixé à ses deux extrémités latérales aux parois latérales 11a, 11b, 12a, 12b de l'enceinte 1.

Le conduit d'évacuation 3 placé horizontalement défini le niveau de la surface libre S. Le tronçon amont horizontal 16 du conduit d'amenée 2 est situé au-dessus de la surface libre S et ceci pour éviter tous refoulements des effluents par le conduit d'amenée 2.

La surface libre S est, quant à elle, située à une distance H du fond 4 qui est de l'ordre de 0,7 K à 0,9 K et de préférence égale ou voisine de 0,8 K, K étant l'écartement entre le fond 4 et le couvercle 13.

Au conduit d'évacuation 3 est associée une cloison verticale 25 située pour partie au-dessus et pour partie au-dessous de la surface libre S. Par exemple, le bord inférieur 26 de la cloison verticale 25 située entre 0,10 H et 0,20 H et en particulier est égal ou voisin de 0,15 H environ à partir de la surface libre S. La surface libre S est elle-même située sensiblement à mi-hauteur de la cloison 25.

Au conduit d'évacuation 3 est également associé un second déflecteur 27 comportant un tronçon inférieur 27a incliné du fond 4 vers le couvercle 13 et des parois d'extrémités 9a, 9b vers les parois d'extrémités 10a, 10b.

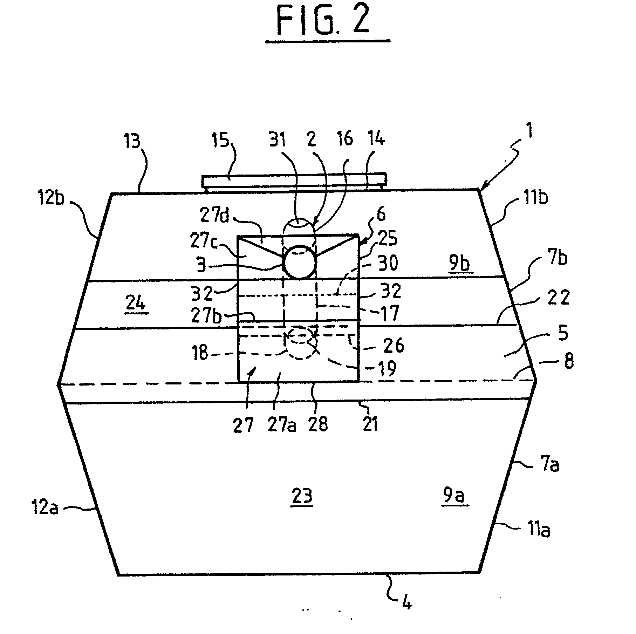

La cloison verticale 25 est située au moins sensiblement à l'ablomb du bord inférieur 28 du second déflecteur 27. La cloison verticale 25 et le second déflecteur 27 définissent un passage 29 pour les eaux claires. Ce passage 29 comporte une ouverture d'entrée au moins sensiblement verticale limitée par les bords inférieurs 26, 28 de la cloison 25 et du second déflecteur 27, puis un coude limité par le tronçon inférieur 27a pour empêcher le passage des matières flottantes, puis une ouverture de sortie dans un tronçon vertical en communication avec le conduit d'évacuation 3. Des cloisons latérales d'extrémités 32 (figure 2) relient rigidement la cloison verticale 25 et le second déflecteur 27. Ces cloisons latérales verticales 32 ont une forme trapézoidale dont la petite base correspond au tronçon supérieur 27c, la grande base à l'écartement entre le bord supérieur de la cloison 25 et le bord inférieur 28 du déflecteur 27 et la largeur l'écartement entre la cloison 25 et le tronçon supérieur 27c. Les cloisons 32 en combinaison avec la cloison 25 et le second déflecteur 27 forment une sorte de boîtier dans lequel l'eau ne peut pénétrer que par le passage 29.

Une grille 30 est placée horizontalement dans le passage 29 vers la sortie en dessous de la surface libre S. Sa position est telle qu'elle est facilement accessible par le regard 14 placé à l'aplomb. Elle est montée amovible.

Une autre grille 33, verticale, de protection supplémentaire, est placée dans le passage 29 à l'entrée, en prolongeant la cloison 25 vers le bas jusqu'au bord 28. Les déchets arrêtés par la grille 33 peuvent décanter ou flotter librement dès que cesse le courant dans la fosse septique.

La cloison verticale 25 et le second déflecteur 27 ont une largeur identique ou voisine qui peut être limitée à environ 2,5 fois à 6 fois et en particulier à 4 fois environ le diamètre du conduit d'évacuation 3 (figure 2).

L'écartement entre les bords libres inférieurs 26, 28 de la cloison 25 et du second déflecteur 27 c'est-à-dire la hauteur de l'ouverture d'entrée du passage 29 peut être comprise entre 0,9 P 1,1 P et en particulier égale ou voisine de P, P étant la profondeur immergée de la cloison verticale 25. Cet écartement peut également être compris entre 0,10 H et 0,20 H environ et en particulier être égal ou voisin de 0,15 H.

Le bord libre inférieur 26 de la cloison 25 est situé au même niveau qu'une arête 27b séparant le tronçon inférieur 27a incliné du second déflecteur 27 d'un tronçon supérieur 27c au moins sensiblement vertical et relié au conduit d'évacuation 3 et même saillant au dessus de celui-ci en un tronçon 27d.

L'écartement entre le tronçon supérieur 27c et la cloison verticale 25 peut être du même ordre de grandeur que la hauteur de l'ouverture d'entrée du passage 29, notamment comprise entre 1 et 1,5 P environ ou égale ou de l'ordre de 0,2 H.

Le conduit d'amenée 2, le conduit d'évacuation 3 ainsi que la cloison verticale 25 et le second déflecteur 27 sont tout entier situés dans la coquille supérieure 7b et le premier déflecteur 20 situés au moins partiellement dans la coquille supérieure 7b et au voisinage de la base 8.

Le premier déflecteur 20, le second déflecteur 27, la cloison 25 sont d'un encombrement limité permettant leur passage par le regard 14.

Le bord inférieur 21 du premier déflecteur 20 détermine le niveau supérieur admissible pour les boues accumulées sur le fond 4 de l'enceinte 1.

La surface d'échange entre les boues B accumulées sur le fond 4 de l'enceinte 1 et le liquide surnageant E est sensiblement égale à la totalité de la surface de la section horizontale de l'enceinte 1 au niveau du bord inférieur 21 du premier déflecteur 20 ou au niveau de la surface supérieure des boues B.

Une ouverture 31 percée en partie haute du conduit d'amenée 2 permet la réalisation d'une communication libre, continue et permanente pour le passage de l'air nécessaire au fonctionnement de la fosse septique toutes eaux, depuis le conduit d'évacuation 3 qui ne plonge pas dans le liquide contenu dans la fosse et le conduit d'amenée 2.

Le premier déflecteur 20, le second déflecteur 27 et la cloison verticale 25 sont outre les conduits d'amenée et d'évacuation 2, 3 les seuls organes placés à l'intérieur de l'enceinte 1. L'enceinte 1 forme donc un compartiment unique non séparé en deux compartiments totalement distincts par une cloison verticale.

L'invention peut naturellement faire l'objet de nombreuses variantes de réalisation, tout en restant dans le cadre du contenu des revendications.

## Revendications

1. Fosse septique toutes eaux comprenant une enceinte (1), un conduit d'amenée (2) des eaux usées, un conduit d'évacuation (3) des eaux claires vers un système d'épandage, des moyens (5) de décantation par dépôt sur le fond (4) de l'enceinte (1) des matières les plus lourdes et par accumulation en surface S des graisses et particules légères et de liquéfaction au moins partielle de ces matières par fermentation anaérobique, des moyens (6) de protection du système d'épandage afin de prévenir son colmatage, intégrés à l'enceinte (1) même, caractérisée par le fait que les moyens (5) de décantation et de liquéfaction et les moyens (6) de protection sont placés dans un compartiment unique de l'enceinte (1); le conduit d'amenée (2) forme un double coude dont le tronçon aval (18) est dirigé dans son ensemble vers la paroi (9a, 9b) de l'enceinte (1) de manière que les effluents soient dirigés vers cette paroi et dont la sortie (19) est ouverte également vers le haut de manière que les effluents soient dirigés également vers le haut; elle comporte un premier déflecteur (20) placé transversalement dans l'enceinte (1), au moins sensiblement au niveau de la sortie (19), s'étendant sur toute ou au moins une partie substantielle de la largeur de l'enceinte (1), incliné notamment de 35 à 45 degrés sur la verticale et en particulier de 45° environ du fond (4) vers le couvercle (13) et des parois d'extrémités (9a, 9b) vers les parois d'extrémités (10a, 10b), le premier déflecteur (20) ayant pour fonction d'améliorer la décantation et de limiter la progression des turbulences vers le fond de l'enceinte (1); au conduit d'évacuation (3) sont associés d'une part une cloison verticale (25) située pour partie au-dessus, pour partie au-dessous de la surface libre S au moins sensiblement à l'aplomb du bord inférieur (28) du second déflecteur (27) et, d'autre part, un second déflecteur (27) comportant un tronçon inférieur (27a) incliné du fond (4) vers le couvercle (13) et des parois d'extrémités (9a, 9b) vers les parois d'extrémités (10a, 10b); la cloison verticale (25) et le second déflecteur (27), et des cloisons latérales (32), définissant un passage (29) pour les eaux claires comportant une ouverture d'entrée au moins sensiblement verticale limitée par les bords libres inférieurs (26, 28) de la cloison (25) et du second déflecteur (27), puis un coude limité par le tronçon inférieur (27a) du déflecteur pour empêcher le passage des matières flottantes, puis une ouverture de sortie en communication avec le conduit d'évacuation (3).

2. Fosse septique selon la revendication 1, caractérisée par le fait que le centre du premier déflecteur (20) est situé entre 0,65 H et 0,75 H et en particulier à 0,70 H environ à partir du fond (4).

3. Fosse septique selon l'une quelconque des revendications 1 à 2, caractérisée par le fait que le bord inférieur (21) du premier déflecteur (20) est situé entre 0,50 H et 0,60 H et en particulier à 0,55 H environ à partir du fond (4).

4. Fosse septique selon l'une quelconque des revendications 1 à 3, caractérisée par le fait que le bord supérieur (22) du premier déflecteur (20) est situé entre 0,75 H et 0,85 H et en particulier à 0,80 H environ à partir du fond (4).

5. Fosse septique selon l'une quelconque des revendications 1 à 4, caractérisée par le fait que le premier déflecteur (20) est situé environ au tiers de la longueur de l'enceinte (1) à partir des parois d'extrémités (9a, 9b), ou à une distance des parois d'extrémités (9a, 9b) égale à ou de l'ordre de 6 à 7 fois le diamètre du conduit d'amenée 2 ou de l'ordre de H.

6. Fosse septique selon l'une quelconque des revendications 1 à 5, caractérisée par le fait que le premier déflecteur (20) laisse d'une part entre son bord inférieur (21) et le fond (4) un plus grand passage inférieur (23) et d'autre part entre son bord supérieur (22) et la surface libre S un plus petit passage supérieur (24).

7. Fosse septique selon l'une quelconque des revendications 1 à 6, caractérisée par le fait que le bord inférieur (26) de la cloison (25) est située entre 0,10 H et 0,20 H et en particulier à 0,15 H environ à partir de la surface libre S.

8. Fosse septique selon l'une quelconque des revendications 1 à 7, caractérisée par le fait que la surface libre S est située à mi-hauteur de la cloison (25).

9. Fosse septique selon l'une quelconque des revendications 1 à 8, caractérisée par le fait qu'au moins une grille (30, 33) est placée dans le passage (29), notamment une grille horizontale (30) vers la sortie et/ou une grille verticale (33) à l'entrée.

10. Fosse septique selon l'une quelconque des revendications 1 à 9, caractérisée par le fait que la cloison verticale (25) et le second déflecteur (27) ont une largeur identique ou voisine limitée à environ 2,5 fois à 6 fois et en particulier 4 fois environ le diamètre du conduit d'évacuation (3).

11. Fosse septique selon l'une quelconque des revendications 1 à 10, caractérisée par le fait que l'écartement entre les bords libres inférieurs (26, 28) de la cloison (25) et du second déflecteur (27), correspondant à la hauteur de l'ouverture d'entrée du passage (29) est comprise entre 0,9 et 1,1 P et en particulier égale à P environ.

12. Fosse septique selon l'une quelconque des revendicatins 1 à 11, caractérisée par le fait que l'écartement entre les bords libres inférieurs (26, 28) de la cloison (25) et du second déflecteur (27), est compris entre 0,10 H et 0,20 H et en particulier égal à 0,15 H environ.

13. Fosse septique selon l'une quelconque des revendications 1 à 12, caractérisée par le fait que le bord libre inférieur (26) de la cloison (25) est situé au même niveau que l'arête (27b) séparant le tronçon inférieur (27a) incliné du second déflecteur (27) d'un tronçon supérieur (27c) au moins sensiblement vertical.

14. Fosse septique selon l'une quelconque des revendications 1 à 13, caractérisée par le fait que l'écartement entre le tronçon supérieur vertical (27c) du second déflecteur (27) et la cloison verticale (25) est du même ordre de grandeur que la hauteur de l'ouverture d'entrée du passage (29), notamment comprise entre 1 et 1,5 P environ ou égale ou de l'ordre de 0,2 H.

15. Fosse septique selon l'une quelconque des revendications 1 à 14, caractérisée par le fait que le tronçon amont (16) du conduit d'amenée (2) est situé à un niveau supérieur à celui du conduit d'évacuation (3).

16. Fosse septique selon l'une quelconque des revendications 1 à 15, caractérisée par le fait que l'enceinte (1) comprend deux parties identiques ou sensiblement similaires l'une de l'autre: une coquille inférieure (7a) et une coquille supérieure (7b) chacune d'elle ayant en section droite transversale et longitudinale une forme trapézoïdale, les deux coquilles (7a, 7b) étant reliées l'une à l'autre par leur grande base commune (8).

17. Fosse septique selon l'une quelconque des revendications 1 à 6, caractérisée par le fait que le conduit d'amenée (2), le conduit d'évacuation (3) ainsi que la cloison verticale (25) et le second déflecteur (27) sont tout entier situés dans la coquille supérieure (7b) qui comporte sur son couvercle (13) deux regards de visite (14) tandis que le premier déflecteur (20) est situé au moins partiellement dans la coquille supérieure (7b) et au voisinage de la base (8).

18. Fosse septique selon l'une quelconque des revendications 1 à 17, caractérisée par le fait que le premier déflecteur (20), le second déflecteur (27) et la cloison verticale (25) sont d'un encombrement permettant leur passage par un regard (14).

19. Fosse septique selon l'une quelconque des revendications 1 à 18, caractérisée par le fait que le bord inférieur (21) du premier déflecteur (20) détermine le niveau supérieur admissible pour les boues accumulées sur le fond (4) de l'enceinte (1).

20. Fosse septique selon l'une quelconque des revendications 1 à 19, caractérisée par le fait que la surface d'échange entre les boues accumulées sur la fond (4) de l'enceinte (1) et le liquide surnageant est sensiblement égal à la totalité de la surface de la section horizontale de l'enceinte au niveau du bord inférieur (21) du premier déflecteur (20) ou de la surface supérieure des boues.

21. Fosse septique selon l'une quelconque des revendications 1 à 20, caractérisée par le fait qu'il y a une communication libre continue et permanente pour le passage de l'air entre le conduit d'évacuation (3) et le conduit d'amenée (2) grâce à des ouvertures en partie haute (31) prévues sur les conduits d'évacuation (3) et d'amenée (2).

22. Fosse septique selon l'une quelconque des revendications 1 à 21, caractérisée par le fait que le premier déflecteur (20), le second déflecteur (27) et la cloison verticale (25) sont, outre les conduits d'amenée et évacuatioin (2, 3) les seuls organes placés à l'intérieur de l'enceinte (1).

23. Fosse septique selon l'une quelconque des revendications 1 à 22, caractérisée par le fait que l'enceinte (1) forme un compartiment unique non séparé en deux compartiments distincts par une cloison transversale.

**Claims**

1. A septic tank for sewage and domestic waste water comprising a tank (1), an inlet pipe (2) for sewage and waste water, an outlet pipe (3) to take the clarified water to a broad irrigation system, means (5) of clarification by settlement of heavy matter at the bottom (4) of the tank (1) and of flotation of grease and light particles at the surface S, and of at least partial liquefaction of this matter by anaerobic fermentation, means (6) to protect the broad irrigation system in order to avoid blockages, built into the tank (1) itself, characterised in that the means (5) of clarification and liquefaction and the protection means (6) are both located in the tank's sole compartment (1); the inlet pipe (2) forms a double bend of which the downstream section (18) is substantially directed towards the side walls (9a, 9b) of the tank (1), so that effluent is sent towards this side, and in addition the outlet (19) itself is directed upwards so that the effluent is sent upwards also; it comprises a first stream deflector (20) placed across the tank (1), at least substantially at the level of the outlet (19), spreading entirely, or at least substantially, over the width of the tank (1), notably inclined at an angle of 35 to 45 degrees from the vertical and preferably at 45° from the bottom (4) towards the cover (13), and from the side walls (9a, 9b) towards the end walls (10a, 10b), this first deflector (20) serving to improve clarification and to limit the progression of turbulence towards the bottom of the tank (1); a vertical partition (25), located partly above and partly below the open space S, and at least substantially perpendicular to the lower edge (28) of the second deflector (27), and a second deflector (27), comprising a lower section (27a) angled from the bottom (4) towards the cover (13) and from the side walls (9a, 9b) towards the end walls (10a, 10b), are both associated with the outlet pipe (3); the vertical partition (25) and the second deflector (27) and lateral walls (32) define a passage (29) for clarified water comprising an at least substantially vertical opening limited by the lower free edges (26), (28) of the partition (25) and the second deflector (27), plus a bend limited by the lower section (27a) of the deflector in order to prevent floating matter from coming through, escaping and an exit communicating with the outlet pipe.

2. A septic tank according to claim 1, characterised in that the centre of the first deflector (20) is located between 0.65 H and 0.75 H and preferably at 0.7 H from the bottom (4).

3. A septic tank according to either of claims 1 or 2, characterized in that the lower edge (21) of the first deflector (20) is located between 0.50 H and 0.60 H and preferably at about 0.8 H from the bottom (4).

4. A septic tank according to any one of claims 1–3, characterized in that the upper edge (22) of the first deflector (20) is located between 0.75 H and 0.85 H and preferably at about 0.8 H from the bottom (4).

5. A septic tank according to any one of claims 1–4, characterized in that the first deflector (20) is placed at a distance equal to one-third of the tank (1) length, from the side walls (9a, 9b), or approximately at a distance equal to or approximately 6 to 7 times the diameter of the inlet pipe (2), or the approximate equivalent of H, from the side walls (9a, 9b).

6. A septic tank according to any one of claims 1–5, characterized in that the first deflector (20) allows first, a wider lower passage (23) between its lower edge (21) and the bottom (4), and second, a smaller upper passage (24) between its upper edge (22) and the open space S.

7. A septic tank according to any one of claims 1–6, characterized in that the lower edge (26) of partition (25) is located between 0.1 H and 0.2 H and preferably at about 0.15 from open space S.

8. A septic tank according to any one of claims 1–7, characterized in that the open space S is located half-way up the partition (25).

9. A septic tank according to any one of claims 1–8, characterized in that at least one screen (30), (33) is located in the passage (29), preferably a horizontal screen (30) at the outlet and/or a vertical screen (33) at the inlet.

10. A septic tank according to any one of claims 1–9, characterized in that the vertical partition (25) and the second deflector (27) are of identical or similar width no more than approximately 2.5 to 6 times, and preferably approximately 4 times, the diameter of the outlet pipe (3).

11. A septic tank according to any one of claims 1–10, characterized in that the distance between the free lower edges (26), (28) of the partition (25) and the second deflector (27), corresponding to the height of the inlet opening to passage (29) is between 0.9 and 1.1 P and preferably approximately equal to P.

12. A septic tank according to any one of claims 1–11, characterized in that the distance between the free lower edges (26), (28) of the partition (25) and the second deflector (27) is between 0.1 H and 0.2 H and preferably 0.15 H approximately.

13. A septic tank according to any one of claims 1–12, characterized in that the free lower edge (26) of the partition (25) is located at the same level as the ridge (27b) separating the angled lower section (27a) of the second deflector (27) from the upper, at least substantially vertical, section (27c).

14. A septic tank according to any one of claims 1–13, characterized in that the distance between the upper vertical section (27c) of the second deflector (27), and the vertical partition (25) is approximately equal to the height of the inlet opening of passage (29), preferably between 1 and 1.5 P approximately, or equal or nearly so to 0.2 H.

15. A septic tank according to any one of claims 1–14, characterized in that the upstream section (16) of the inlet pipe (2) is located at a higher level than that of the outlet pipe (3).

16. A septic tank according to any one of claims 1–15, characterized in that the tank (1) comprises two identical or substantially similar halves: a lower shell (7a) and an upper shell (7b), each having a trapezoid shape in straight cross-section and longitudinal section, the two shells (7a, 7b) being joined together by their common base (8).

17. A septic tank according to any one of claims 1–16, characterized in that the inlet pipe (2), the outlet pipe (3), the vertical partition (25) and the second deflector (27) are all wholly located in the upper shell 7b which comprises two inspection ports (14) in its cover (13), whereas the first deflector (20) is at least partly located in the upper shell 7b and in the neighbourhood of the base (8).

18. A septic tank according to any one of claims 1–17, characterized in that the first deflector (20), the second deflector (27) and the vertical partition (25) are of a size which allows them to be moved through an inspection port (14).

19. A septic tank according to any one of claims 1–18, characterized in that the lower edge (21) of the first deflector (20) determines the upper level allowable for the sludge deposited at the bottom (4) of the tank (1).

20. A septic tank according to any one of claims 1–9, characterized in that the surface of exchange between the sludge which has settled at the bottom (4) of the tank (1) and the liquid floating on the surface is substantially equal to the total surface of the horizontal section of the tank (1) at the level of the lower edge (21) of the first deflector (20) or the upper surface of the sludge.

21. A septic tank according to any one of claims 1–20, characterized in that there is free, continuous and permanent movement of air between the outlet pipe (3) and the inlet pipe (2) provided by openings in the upper section (31) on the outlet (3) and inlet (2) pipes.

22. A septic tank according to any one of claims 1–21, characterized in that the first deflector (20), the second deflector (27) and the vertical partition (25) are the only organs, apart from the inlet and outlet pipes (2), (3), to be located inside the tank.

23. A septic tank according to any one of claims 1–22, characterized in that the tank (1) forms a single compartment, not separated into two distinct compartments by a transversal partition.

**Patentansprüche**

1. Biologische Allwasser-Klärgrube mit einem Tank (1), einer Abwasserzuleitung (2), einer zu einem Verrieselungssystem führenden Klarwasserableitung (3), Mitteln (5) zur Klärung durch Ablagerung der schwersten Stoffe auf dem Boden (4) des Tanks (1) und durch Anhäufung der leichten Teilchen an der Oberfläche S, und wenigstens teilweiser Verflüssigung dieser Stoffe durch anaerobe Gärung, in den Tank (1) selbst integrierten Schutzmitteln (6) für das Verrieselungssystem, um dessen Verstopfung vorzubeugen, dadurch gekennzeichnet, dass die Mittel (5) zur Klärung und Verflüssigung und die Schutzmittel (6) in einem selben Bereich des Tanks (1) angeordnet sind; dass die Zuleitung (2) einen doppelten Krümmer bildet, dessen stromabwärts weisender Abschnitt (18) insgesamt gegen die Wand (9a, 9b) des Tanks (1) gerichtet ist, so dass die Ausflüsse gegen diese Wand gelenkt werden und dessen Auslauf (19) ebenfalls derart nach oben geöffnet ist, dass die Ausflüsse auch nach oben gerichtet sind; dass sie einen ersten Abweiser (20) umfasst, der innerhalb des Tanks (1) in Querrichtung wenigstens merklich auf der Ebene des Auslaufes (19) angeordnet ist, sich über die gesamte Breite des Tanks (1) oder wenigstens über einen grossen Teil derselben erstreckt und insbesondere um 35 bis 40° und besonders um etwa 45° zur Senkrechten des Bodens (4) gegen den Deckel (13) und die endseitigen Wände (9a, 9b) und gegen die endseitigen Wände (10a, 10b) geneigt ist, wobei der erste Abweiser (20) zur Verbesserung der Klärung und zur Begrenzung der Wirbelströmungen in Richtung auf den Boden des Tanks (1) bestimmt ist; dass der Ableitung (3) einerseits eine diese zum Teil überragende und zum Teil unterhalb der freien Oberfläche S, merklich lotrecht zum unteren Rand (28) des zweiten Abweisers (27) verlaufende senkrechte Trennwand (25) und andererseits ein zweiter Abweiser (27) mit einem vom Boden (4) aus gegen den Deckel (13) und die Endwände (9a, 9b) sowie gegen die Endwände (10a, 10b) geneigten unteren Abschnitt (27a) zugeordnet sind; dass die vertikale Trennwand (25) und der zweite Abweiser (27) sowie die Seitenwände (32) einen Durchgang (29) für das Klarwasser definieren, der eine wenigstens merklich vertikale, durch die freien unteren Ränder (26, 28) der Trennwand (25) und des zweiten Abweisers (27) begrenzte Einlassöffnung, einen durch den unteren Abschnitt (27a) des Abweisers begrenzten Knick zur Verhinderung des Durchganges schwebender Stoffe sowie eine mit der Ableitung (3) in Verbindung stehende Auslassöffnung aufweist.

2. Biologische Klärgrube nach Anspruch 1, dadurch gekennzeichnet, dass der Mittelpunkt des ersten Abweisers sich in einem Abstand von 0,65 H bis 0,75 H und insbesondere etwa 0,70 H vom Boden (4) befindet.

3. Biologische Klärgrube nach einem der vorstehenden Ansprüche 1 oder 2, dadurch gekennzeichnet, dass der untere Rand (21) des ersten Abweisers (20) sich in einem Abstand von 0,50 H bis 0,60 H und insbesondere etwa 0,55 H vom Boden (4) befindet.

4. Biologische Klärgrube nach einem der vorstehenden Ansprüche 1 bis 3, dadurch gekennzeichnet, dass der obere Rand (22) des ersten Abweisers (20) sich in einem Abstand von 0,75 H bis 0,85 H und insbesondere etwa 0,80 H vom Boden (4) befindet.

5. Biologische Klärgrube nach einem der vorstehenden Ansprüche 1 bis 4, dadurch gekennzeichnet, dass der erste Abweiser (20) etwa ein Drittel der Länge des Tanks (1) von den Endwänden (9a, 9b) abliegt oder in einer Entfernung von den Endwänden (9a, 9b) angeordnet ist, die gleich oder annähernd gleich dem sechs- bis siebenfachen Durchmesser der Zuleitung 2 ist oder etwa H beträgt.

6. Biologische Klärgrube nach einem der vorstehenden Ansprüche 1 bis 5, dadurch gekennzeichnet, dass der erste Abweiser (20) einerseits einen grösseren unteren Durchgang (23) zwischen seinem unteren Rand (21) und dem Boden (4) und andererseits einen kleineren oberen Durchgang (24) zwischen seinem oberen Rand (22) und der freien Oberfläche S freilässt.

7. Biologische Klärgrube nach einem der vorstehenden Ansprüche 1 bis 6, dadurch gekennzeichnet, dass der untere Rand (26) der Trennwand (25) sich in einem Abstand von 0,10 H bis 0,20 H und insbesondere etwa 0,15 H von der freien Oberfläche S befindet.

8. Biologische Klärgrube nach einem der vorstehenden Ansprüche 1 bis 7, dadurch gekennzeichnet, dass die freie Oberfläche S sich auf halber Höhe der Trennwand (25) befindet.

9. Biologische Klärgrube nach einem der vorstehenden Ansprüche 1 bis 8, dadurch gekennzeichnet, dass in dem Durchgang (29) wenigstens ein Gitter (30, 33), insbesondere ein zum Zulauf gerichtetes horizontales Gitter (30) und/oder ein vertikales Gitter (30) am Einlauf angeordnet ist.

10. Biologische Klärgrube nach einem der vorstehenden Ansprüche 1 bis 9, dadurch gekennzeichnet, dass die vertikale Trennwand (25) und der zweite Abweiser (27) eine gleiche oder annähernd gleiche Breite aufweisen, die auf das 2, 5- bis 6fache und insbesondere etwa das 4fache des Durchmessers der Ableitung (3) begrenzt ist.

11. Biologische Klärgrube nach einem der vorstehenden Ansprüche 1 bis 10, dadurch gekennzeichnet, dass der der Höhe der Einlauföffnung des Durchgangs (29) entsprechende Abstand zwischen den freien unteren Rändern (26, 28) der Trennwand (25) und dem zweiten Abweiser (27) zwischen 0,9 und 1,1 P beträgt und insbesondere etwa gleich P ist.

12. Biologische Klärgrube nach einem der vorstehenden Ansprüche 1 bis 11, dadurch gekennzeichnet, dass der Abstand zwischen den freien unteren Rändern (26, 28) der Trennwand (25) und dem zweiten Abweiser (27) zwischen 0,10 H und 0,20 H liegt und insbesondere etwa gleich 0,15 H ist.

13. Biologische Klärgrube nach einem der vorstehenden Ansprüche 1 bis 12, dadurch gekennzeichnet, dass der freie untere Rand (26) der Trennwand (25) auf derselben Ebene liegt wie die Kante (27b), welche den geneigten unteren Abschnitt (27a) des zweiten Abweisers (27) von einem wenigstens merklich vertikalen oberen Abschnitt (27c) trennt.

14. Biologische Klärgrube nach einem der vorstehenden Ansprüche 1 bis 13, dadurch gekennzeichnet, dass der Abstand zwischen dem vertikalen oberen Abschnitt (27c) des zweiten Abweisers (27) und der vertikalen Trennwand (25) in derselben Grössenordnung liegt wie die Höhe der Einlauföffnung des Durchganges (29), und insbesondere 1 bis 1,5 P beträgt oder gleich oder annähernd gleich 0,2 H ist.

15. Biologische Klärgrube nach einem der vorstehenden Ansprüche 1 bis 14, dadurch gekennzeichnet, dass der stromaufwärts gerichtete Abschnitt (16) der Zuleitung (2) auf einer höheren Ebene liegt als der der Ableitung (3).

16. Biologische Klärgrube nach einem der vorstehenden Ansprüche 1 bis 15, dadurch gekennzeichnet, dass der Tank (1) zwei identische oder einander merklich ähnliche Teile umfasst, und zwar eine untere Schale (7a) und eine obere Schale (7b), von denen jede im Quer- und Längsprofil eine Trapezform aufweist, wobei die beiden Schalen (7a, 7b) miteinander durch ihre grosse gemeinsame Grundfläche verbunden sind.

17. Biologische Klärgrube nach einem der vorstehenden Ansprüche 1 bis 16, dadurch gekennzeichnet, dass die Zuleitung (2), die Ableitung (3) sowie die Trennwand (25) und der zweite Abweiser (27) insgesamt in der oberen Schale (7b) angeordnet sind, die auf ihrem Deckel (13) zwei Schaulöcher (14) aufweist, während der erste Abweiser (20) sich wenigstens teilweise in der oberen Schale (7b) und in der Nähe der Grundfläche (8) befindet.

18. Biologische Klärgrube nach einem der vorstehenden Ansprüche 1 bis 17, dadurch gekennzeichnet, dass der erste Abweiser (20), der zweite Abweiser (27) und die vertikale Trennwand (25) derart bemessen sind, dass sie den Durchtritt durch ein Schauloch (14) gestatten.

19. Biologische Klärgrube nach einem der vorstehenden Ansprüche 1 bis 18, dadurch gekennzeichnet, dass der untere Rand (21) des ersten Abweisers (20) das für den auf dem Boden (4) des Tanks (1) angesammelten Schlamm zulässige obere Niveau bestimmt.

20. Biologische Klärgrube nach einem der vorstehenden Ansprüche 1 bis 19, dadurch gekennzeichnet, dass die Austauschfläche zwischen dem auf dem Boden (4) des Tanks (1) angesammelten Schlamm und der darüber stehenden Flüssigkeit merklich gleich der Gesamtfläche des Horizontalschnitts des Tanks auf der Ebene des unteren Randes (21) des ersten Abweisers (20) oder der oberen Schlammoberfläche ist.

21. Biologische Klärgrube nach einem der vorstehenden Ansprüche 1 bis 20, dadurch gekennzeichnet, dass dank der im oberen Teil (31) auf der Zuleitung (2) und der Ableitung (3) vorgesehenen Öffnungen eine kontinuierliche und ständige freie Verbindung für den Luftdurchgang zwischen der Ableitung (3) und der Zuleitung (2) gegeben ist.

22. Biologische Klärgrube nach einem der vorstehenden Ansprüche 1 bis 21, dadurch gekennzeichnet, dass der erste Abweiser (20), der zweite Abweiser (27) und die vertikale Trennwand (25) ausser den Zu- und Ableitungen (2, 3) die einzigen innerhalb des Tanks (1) angeordneten Organe sind.

23. Biologische Klärgrube nach einem der vorstehenden Ansprüche 1 bis 22, dadurch gekennzeichnet, dass der Tank (1) einen einzigen Raum bildet, der durch eine Querwand in zwei verschiedene Teilbereiche getrennt ist.

# FIG.1

EP 0 240 412 B1

# FIG. 2